# EUROPEAN PATENT SPECIFICATION

(11) **EP 4 063 112 B1**
(45) Date of publication and mention of the grant of the patent: **09.10.2024**
(21) Application number: 22160070.3
(22) Date of filing: 03.03.2022
(51) Int. Cl.: B30B 11/24, B30B 11/22, B30B 9/30, B29B 17/00

(54) **SCREW PRESS MACHINE FOR COMPACTING SOLID WASTE**
SCHNECKENPRESSMASCHINE ZUR VERDICHTUNG VON FESTMÜLL
MACHINE DE PRESSAGE À VIS POUR LE COMPACTAGE DE DÉCHETS SOLIDES

(30) Priority: 03.03.2021 IT 202100004907
(43) Date of publication of application: 28.09.2022
(73) Proprietor: Ripet S.r.l., 20135 Milano (MI) (IT)
(72) Inventor: PERSIA, Alessandro, 20135 Milano (MI) (IT)
(74) Representative: Bottino, Giovanni

(56) References cited:
- EP-A2- 1 688 242
- WO-A1-2004/108381
- CN-A- 101 797 813
- JP-A- 2000 135 597
- JP-A- 2001 278 433
- US-A- 3 991 668
- US-A- 5 452 492
- US-A- 5 611 268
- US-B2- 7 445 442

## Description

Press machine for compacting solid waste, comprising a conduct in which a screw conveyor, driven rotationally by a motor, is centrally arranged, said conduct being provided with a material intake mouth and a material discharge mouth.

Screw presses are known to the state of the art and are typically frustoconical, with helices of a diameter and pitch decreasing towards the discharge mouth to achieve waste compaction.

Machines of this type are described, for example, in German patent DE3429848 (Andreas Kufferath) and in European patents EP239858 (Tetra Pak), EP790122 and EP1193045 (Robin Hamilton).

These machines take bulk material and progressively compact it, while separating the liquid therefrom.

Nowadays, however, waste storage is increasingly geared towards recycling, and recycling technologies, in their progressive refinement, come with increasingly stringent technical requirements.

For example, in the technical field of recycling of plastic containers, strong pressing of the material is required so that it is compacted and takes up as little space as possible, while at the same time preferably maintaining the integrity of the individual containers so that they can be separated again if necessary, i.e. according to colour or material subgroups. In order to optimize production and have the least amount of waste possible, plastic bottle recyclers must be able to operate on bottles that are as flat as possible so that they are easily identifiable, are not distorted or shredded, and can therefore be processed through the recycling system with very low resulting waste.

In this type of material, state-of-the-art presses cannot meet the needs of the recycling chain because they tend to destroy the material irreparably during compaction.

CN 101797813 A discloses a press machine according to the preamble of claim 1.

US3991668A discloses a shredder-compactor apparatus comprising a hopper for receiving the waste material to be treated and a compaction conduct arranged for receiving the waste material from the hopper. A rotating screw conveyor extends along the hopper and through the compaction conduct and operates alongside a breaker bar located in the hopper to shred and tear the waste material in response to the rotation of the screw conveyor. As the screw conveyor rotates, the shredded waste material is conveyed in an axial direction through the compaction conduct and compacted therein. A spring-loaded inclined plate is provided at the discharge end of the compaction chamber to keep the backpressure of the compacted material within predetermined limits. Wearable plates are bolted to the inner walls of the compaction conduct, and can be defined as circumferential discontinuities to allow axial material feed.

This device is specifically designed for shredding and does not allow the waste to be compacted while keeping it as intact as possible. If the plates are to be removed, the machine must be shut down and the screw conveyor removed, while the operator must work from the inside, since the plates are bolted internally to the conduct walls. Moreover, beyond a certain wear threshold, the plates must be replaced, because their position is not adjustable.

Document EP1688242A2 discloses a device for compacting materials, in particular recyclable residues, with a hollow rotatable screw conveyor mounted in a chamber having an open input area for the material to be compacted and a compaction conduct located downstream of the screw conveyor conduct. The compaction chamber has movable walls driven by hydraulic cylinders for radial compression, while a power piston is provided inside the hollow screw conveyor for axial ejection of the compacted material from the compaction chamber towards the outlet.

This device requires moving parts and a hydraulic circuit to drive the actuator cylinders, making it expensive, heavy and difficult to maintain.

There is, therefore, an unmet need in the state of the art for a press machine which adequately compacts the material without damaging it and which, at the same time, is easy to manufacture, small in size and weight and easy to maintain.

The present invention aims to remedy all these and other drawbacks of the prior art, with the following proposal.

The invention relates to a press machine for compacting solid waste as described above, wherein said conduct is further divided into two zones, of which one zone for transferring the material provided with the intake mouth and the screw conveyor, which screw conveyor has a fixed pitch, and a zone for compressing the material provided with the discharge mouth, which compression zone has a progressive geometric variation of the cross-section of the conduct from circular to square in the direction of the discharge mouth.

From the intake mouth to the discharge mouth a path is thus formed for the material, wherein the material is first moved by the screw conveyor until it enters the compression zone or chamber, in which it is pressed by the incoming material and compressed by the walls due to the geometric variation of the cross-section as it moves towards the discharge mouth.

In this way, the fixed-pitch screw conveyor has the sole task of feeding the material into the compression chamber and thereby exerting pressure on the material already contained therein. This thrust towards the discharge mouth causes the compaction of the material thanks to the progressive geometric variation of the cross-section of the compression chamber. In this way, the material is not damaged by the rotating screw conveyor and remains intact during the compaction phase.

Under the thrust of the material delivered by the screw conveyor, the geometric variation of the cross-section of the compression conduct in the compression zone prevents the material in the compression chamber from rotating in the direction of rotation of the screw conveyor and rubbing against the inner wall of the compression chamber. Conversely, the material is conveyed only towards the discharge mouth, minimizing friction on the inner wall.

The cross-section of the conduct in the compression zone is circular at the connection part to the transfer zone and square, or substantially square, at the opposite end to form said discharge mouth.

In an exemplary embodiment, the compression zone shows a progressive decrease in the cross-section of the conduct in the direction of the discharge mouth. This contributes to the compaction of the material under the pressure of the material incoming from the transfer zone.

According to the invention the screw conveyor is housed exclusively in the transfer zone, i.e. it does not penetrate into the compression zone.

In a preferred embodiment, the screw conveyor has a fixed diameter. This allows the material to be kept as intact as possible.

In one embodiment, the pitch of the screw conveyor corresponds substantially to the height of a plastic bottle.

This makes it easy to move urban plastic waste, such as bottles or similar containers, to the transfer area without ruining them, even if they are placed with their longitudinal axis in a position parallel to the longitudinal axis of the conduct.

According to the invention, the inner wall of the transfer zone has one or more raised ribs arranged longitudinally.

This prevents the material from sliding freely over the inner conduct wall jointly with the screw conveyor. In fact, this would prevent material feed, and the material would simply rotate together with the screw conveyor. The combination of the rotating movement of the screw conveyor and the presence of the raised longitudinal ribs guarantees the movement of the material towards the compression zone.

According to the invention, the conduct wall in the transfer zone has one or more through slots, into which elongated elements corresponding in shape to the slots are at least partially inserted, so that the portions of elements protruding inside the conduct constitute the said ribs.

In fact, even though they are manufactured with durable material, the internal ribs are subject to a great deal of wear due to rubbing under prolonged machine operation, especially when the material is PET bottles. Providing ribs made up of elements inserted into special through slots makes it possible to replace the elements when the ribs are damaged or reduced to an insufficient size, and to restore the initial conditions of the machine that are optimal for its operation.

According to the invention, means of fixing the elongated elements within the slots are provided, which means of fixing are adjustable to alter the depth of insertion of the elongated elements into the slots.

This makes it possible not only to remove and replace the elements but also to adjust their insertion condition in the slots and, correspondingly, the extension of the element portion placed inside the conduct. In this way, advantageously, the machine can be periodically inspected and, in the event of excessive wear of the internal ribs, that is, of the portions of elongated elements placed inside the conduct, the depth of insertion of the elements can be altered in order to restore correct proportioning of the ribs.

In one embodiment, the screw conveyor has a thrust surface that is locally perpendicular to the longitudinal axis of the conduct.

In this way, the material is always pushed only in the longitudinal direction of the conduct and not radially towards the conduct wall. This prevents the creation of excessive friction between the material and the inner conduct wall, reducing the deterioration of the material and the wear of the machine as a whole, in particular the ribs.

In an exemplary embodiment, the screw conveyor comprises a drive shaft with a diameter of between 15% and 25% of the diameter of the screw conveyor.

This makes it possible to have a shaft of very small size compared to the total size of the screw conveyor, and therefore of the conduct. Consequently, sufficient space is created to accommodate the material, for example the plastic bottle, such that it is not cut or crushed by the screw conveyor itself, but only transferred, in the transfer zone, and then compressed in the compression zone. This results in a final compression along a longitudinal plane of the single piece of material to be compressed, which is optimal for recycling.

According to a further exemplary embodiment, which does not form part of the claimed invention, the screw conveyor comprises an inner helix part connected to the shaft and an outer helix part connected to the inner helix part, wherein the inner helix part and the outer helix part have a rectangular cross-section, the thickness in the longitudinal direction of the cross-section of the inner helix part being less than the thickness in the longitudinal direction of the cross-section of the outer helix part.

This configuration is particularly advantageous in the manufacturing phase given the greater simplicity that characterizes the production of two smaller helices and their coupling, compared to a single larger helix. At the same time, this advantageously makes it possible to increase the size of the outer helix, which is the part most subject to wear due to its higher tangential speed. A greater thickness of the external helix makes it possible to obtain greater mechanical strength and increased resistance to wear before functional problems occur.

In an exemplary embodiment, which does not form part of the claimed invention, the inner helix part is made of material with a lower tensile strength than the material of the outer helix part.

In a further exemplary embodiment, which does not form part of the claimed invention, the inner helix part has a diameter of between 30% and 40% of the diameter of the screw conveyor, and the outer helix part has a diameter of between 40% and 50% of the diameter of the screw conveyor.

The features of the present invention, and the advantages derived therefrom, will become more apparent from the following disclosure made with reference to the Figures of the accompanying drawings, wherein:

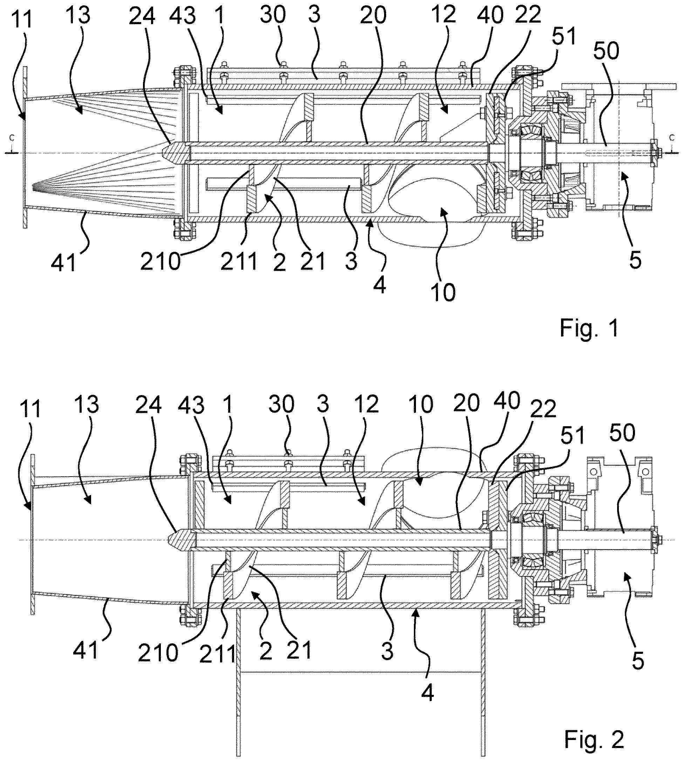

Figure 1 shows a sectional view from the bottom of the machine;
Figure 2 shows a side section view;

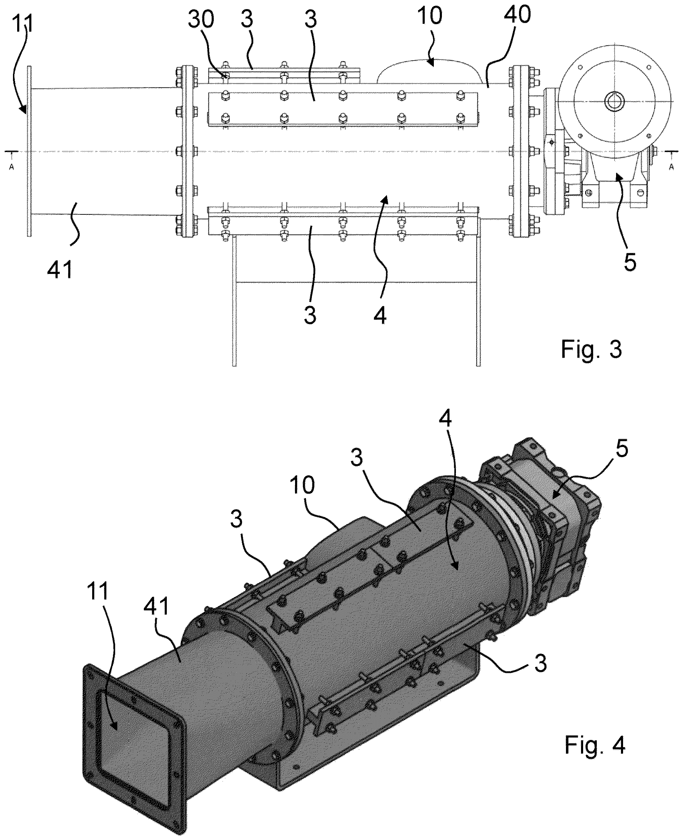

Figure 3 shows a side view;
Figure 4 shows an axonometric view;
Figure 5 shows a cross-sectional view;
Figure 6 shows a front view;
Figure 7 a detail view of the screw conveyor;
Figure 8 shows a schematic cross-sectional view of an embodiment of the compression zone;
Figure 9 shows an external view of an embodiment of the compression zone.

The Figures illustrate a preferred exemplary embodiment of the screw press machine for compacting solid waste according to the present invention. The machine illustrated therein is specifically optimized for the processing of plastic waste, in particular PET bottles and similar containers or trays, and/or metal containers, such as tin or aluminium cans. However, it is possible to apply the technical characteristics of the invention to the processing of other types of waste.

The machine comprises a hollow cylindrical shell 4, preferably made of steel, which identifies within itself a conduct 1 provided with a material intake mouth 10 and a material discharge mouth 11.

The conduct 1 is divided into two zones, a material transfer zone 12 and a material compression zone 13. In the example given in the Figure, the two zones of the conduct 1 are identified by two sectors of the shell 4, of which a first sector 40 defines the transfer zone 12 and a second sector 41 defines the compression zone 13. The first and second sectors 40 and 41 are joined together by an intermediate flange.

The transfer area 12 is placed upstream and is therefore provided with the intake mouth 10, while the compression area 13 is placed downstream and is therefore provided with the discharge mouth 11. The intake mouth 10 is made in the wall of the conduct 1 in the transfer zone 12, in such a position that the material enters the conduct 1 therethrough by force of gravity. The intake mouth 10 can therefore be connected to an intake hopper or an intake conduct suitably sized for plastic bottles or other similar containers.

The discharge mouth 11 is instead placed along the longitudinal axis of the cylindrical conduct 1, at the end thereof.

In the transfer zone 12, the conduct 1 houses therein a screw conveyor 2 placed centrally along the longitudinal axis of the conduct 1 and rotatably driven around such axis by a drive unit. The drive unit consists of an electric motor, not shown in the Figures, connected to the screw conveyor 2 by means of a gear motor 5, but may alternatively comprise a chain for transmitting motion from a drive source of any type known to the person skilled in the art.

The compression zone 13 has a progressive decrease in the cross-section of the conduct 1 in the direction of the discharge mouth 11. The continuous transfer of material from the transfer zone 12 to the compression zone 13 pushes the material already accumulated in the compression zone towards the discharge mouth 11, and the narrowing of the walls of the conduct 1 in the compression zone 13 forces the different components of the material to come into intimate contact with each other, thereby producing the desired compaction. The decrease in cross-section, or span, causes progressive shrinkage along at least one plane of longitudinal cross-section. The progressive decrease may be linear or non-linear.

The geometry of the cross-section of the conduct 1 in the compression zone 13 varies progressively from circular to square in the direction of the discharge mouth 11, in particular it is circular in the part connecting to the transfer zone 12 and square, or substantially square, at the opposite end to form the discharge mouth 11.

This variation in the geometry of the cross-section along the material feed direction enables the material not to rotate within the compression zone 13 following the thrust of the screw conveyor 2. To achieve this, it is possible to provide, alternatively or in combination, grooves or ribs on the compression zone 13 walls; however, such ribs would increase the interference with the material feed, and would require the screw conveyor 2 to exert a much greater thrust.

Conversely, the change in geometry makes possible a plastic deformation of the material in the first part of the compression zone 13 and a feed with progressive compaction towards the discharge mouth 11 without additional stress being exerted on the material.

The wall of the transfer zone 12 has internally one or more longitudinally arranged raised ribs, which constitute grooves within the cylindrical shell 4 constituting the conduct 1. The combination of the rotary movement of the screw conveyor 2 and the presence of the raised longitudinal ribs guarantees the movement of the material towards the compression zone 13, otherwise the material would simply rotate integrally with the screw conveyor 2 inside the conduct 1 and would not be transferred towards the compression zone 13.

In the preferred exemplary embodiment illustrated in the Figures, the wall of the first sector 40 of the cylindrical shell 4, i.e. of the part of the shell 4 in the transfer zone 12, has a plurality of through slots 43 arranged parallel to the longitudinal axis of the conduct 1. Elongated elements 3 corresponding in shape to the slots 43 are inserted into these slots 43 from the outside of the shell 4, so as to protrude partially inside the conduct 1. In this way, the portions of protruding elements 3 within the conduct 1 constitute the ribs.

Means of fixing 30 the elongated elements 3 into the slots 43 are provided, which fixing means 30 are adjustable to change the insertion depth of the elongated elements 3 within the slots 43. Such means 30 can provide fixing systems with distance adjustment of any type known to those skilled in the art.

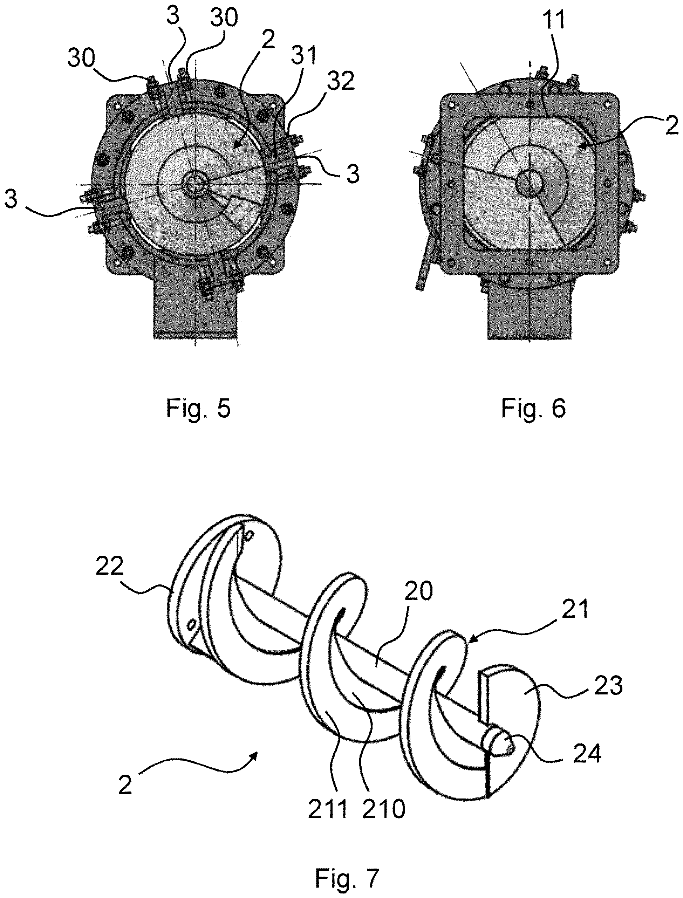

In the exemplary embodiment illustrated in the Figure, the elongated elements 3 have a T-shaped cross-section, visible for example in Figure 5, which therefore identifies an insertion plate 31 in the slot 43, the insertion end of which constitutes the rib inside the conduct 1, and a retainer plate 32, perpendicular to said insertion plate 31 and provided in a position opposite to said insertion end. The retainer plate 32 extends symmetrically on opposite sides of the insertion plate 31, in a condition locally parallel to the outer surface of the cylindrical shell 4. The adjustable fixing means 30 comprise threaded bars welded to the surface of the shell on opposite sides of each slot 43 and extending in the radial direction. The threaded bars engage in corresponding holes provided in the retainer plate 32, on opposite sides with respect to the insertion plate 31. When the elongated element 3 is inserted into the slot 43, the threaded bars are inserted into the holes of the retainer plate 32 and, once the relative position between the elongated element 3 and the shell 4 is adjusted, and consequently the extension of the portion of the elongated element 3 that is inserted into the conduct 1, the elongated element 3 is fixed permanently to the threaded bars by means of nuts tightened onto the retainer plate 32.

It is therefore possible to loosen the nuts and release the elongated element 3 from the threaded bars whenever it is necessary to insert the elongated element 3 further into the slot 43 towards the inside of the conduct 1 due to wear of the insertion end edge constituting the rib. Once the new correct position has been adjusted, the elongated element 3 can be reattached.

The elongated elements 3 are preferably made of Hardox^{®} 460 steel and laser cut. The total extension of the insertion plate 31 is about 50 mm, of which about 35 mm can be used, i.e. progressively inserted into the conduct 1.

Figure 7 illustrates a detailed view of the screw conveyor 2. The screw conveyor 2 has a fixed pitch and consists of a drive shaft 20 arranged along the longitudinal axis of the conduct 1 in a central position, on which a helical coil 21 of a thrust blade is fixed.

The pitch of the screw conveyor 2 corresponds substantially to the height of a plastic bottle, in particular it is between 280 and 300 mm, i.e. the largest height of a plastic bottle. As PET is a hard material, the screw conveyor would have difficulty compressing it with a reduction in pitch, since after an initial crumpling the bottle would not advance and, on the contrary, it would risk blocking the machine. The combination of fixed pitch and subsequent compression chamber 13 allows for optimal compaction of plastic bottles.

The screw conveyor 2 ends with a substantially semicircular plate 23 which ensures that the material delivered to the compression zone 13 can no longer go back, thereby increasing the compression action in the compression zone 13 and minimizing wear in the end part of the screw conveyor 2.

The drive shaft 20 also has a substantially conical end 24 that extends over a short portion of the compression zone 13 and acts as a spacer between the material and the plate 23.

The screw conveyor 2 has a thrust surface oriented towards the discharge mouth 11 which at each point is locally perpendicular to the longitudinal axis of the conduct 1.

The helical coil 21 of the screw conveyor 2 is divided into an inner helix part 210 connected to the shaft 20 and an outer helix part 211 connected to the inner helix part 210.

The drive shaft has a diameter of between 15% and 25% of the diameter of the screw conveyor 2, the internal helix part 210 has a diameter of between 30% and 40% of the diameter of the screw conveyor 2, and the external helix part 211 has a diameter of between 40% and 50% of the diameter of the screw conveyor 2.

The inner helix part 210 and the outer helix part 211 each have a rectangular section, and the thickness in the longitudinal direction of the cross-section of the inner helix part 201 is less than the thickness in the longitudinal direction of the cross-section of the outer helix part 211.

The inner helix part 210 is also made of less rigid material than the outer helix part 211. In particular, the inner helix part 210 is made of material with a lower tensile strength than the material of the outer helix part. Preferably, the two parts are made of steel and of two steels of different composition. The material of the inner helix part 210 is preferably steel with a tensile strength of less than 300 N/mm² for a nominal thickness value of less than 16 mm, while the material of the outer helix part is preferably steel with a tensile strength of more than 300 N/mm² for a nominal thickness value of less than 16 mm.

This makes it possible to have sufficient rigidity and very high resistance to compression in the external part of the screw conveyor 2, because, since the PET is not a fluid material but a rigid body, the screw conveyor 2 can receive high pressure loads that can also cause the shaft 20 to bend, despite the length of the latter not being excessive. At the same time, the inner helix part 210 may have a more elastic behaviour so as to compensate for the reaction forces caused by the material, acting as a shock absorber for small variations of the outer helix part 211 during operation. This reduces the risk of breakage in the welds connecting the helix part of the screw conveyor 2 with the drive shaft 20, a risk which would be significant with a single high stiffness helix part.

In one embodiment, the outer helix part 211 is provided with a filler weld on the outer edge to increase fretting wear resistance.

The screw conveyor 2 is connected to the shaft of the gear motor 5 by means of a flanged coupling, in particular between a flange 22 connected to the screw conveyor 2 and a flange 51 connected to the shaft 50 of the gear motor 5. The motor is preferably electric and sized to deliver 4KW peak, approximately 2.5 KW at steady state.

The press machine of the example illustrated in the Figures makes it possible to produce compacted material of about 200-220 kg/m³.

The press machine can operate in any orientation, preferably inclined and oriented upwards so as to limit encumbrances as much as possible, for example those that might reduce the overall size of a garbage collection station in which the machine is inserted.

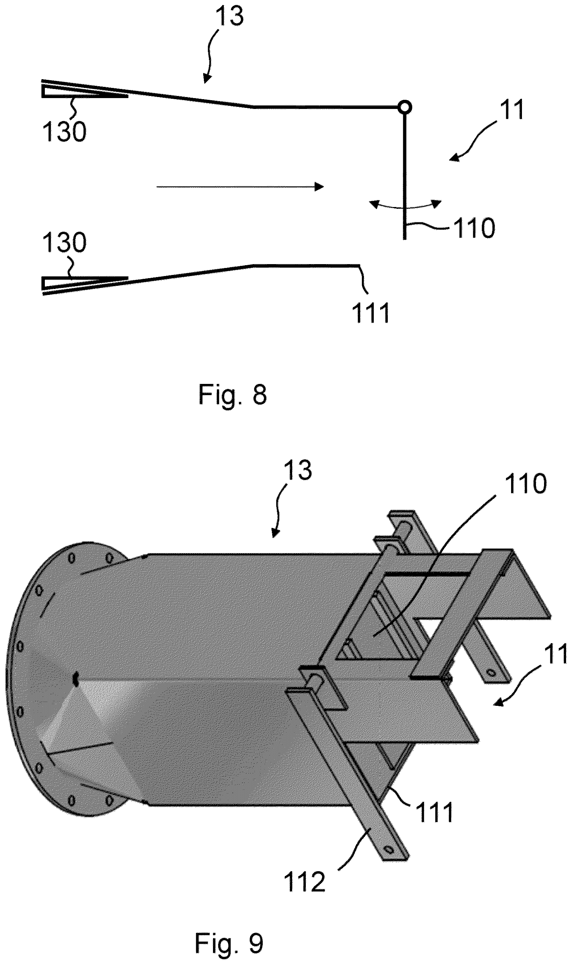

Figure 8 illustrates an embodiment of the compression zone 13. The discharge mouth 11 is provided with an up-and-over door 110 hinged to the upper edge of the discharge mouth 11 so as to oscillate in the direction indicated by the two-way arrow. The door 110 is provided with stable stresses towards the closed position, i.e. the vertical position indicated in the figure. Such stresses, not illustrated in the Figure, are preferably weights, particularly a pair of weights placed laterally to the door 110, on opposite sides thereof. However, the stresses may be of any type, such as springs. When, following the feed direction towards the discharge mouth 11 indicated in the Figure by the one-way arrow, the compacted material reaches the door 110, the door 110 itself rotates, under the thrust of the material, towards an opening condition and begins to push the material downward, with increasing intensity as the amount of material increases and the position of the door approaches the horizontal position. The discharge mouth 11 comprises a lower peripheral edge 111 which is retracted to a predetermined distance from the door. In this way, the lower edge 111 acts as a cutting blade for the material, when the amount of material extruded from the discharge mouth is such that the thrust exerted by the door 110 and the weight of the material itself exceeds the cohesive force of the compacted material. The compacted material is then cut from the lower edge 111 and consequently separated into blocks of essentially constant size.

Alternatively or in combination, the compression zone 13, in the part connecting to the transfer zone 12, has a plurality of triangular-shaped cutting elements 130 of predetermined thickness fixed to the inner wall and arranged on longitudinal planes with respect to the material feed direction. These cutting elements have the dual function of guiding the material in the longitudinal direction, similar to what is done by the ribs 3 in the transfer zone 12, and of providing a sharp edge to the material feed, so that it can be perforated or broken slightly. This is particularly advantageous when using the machine for plastic bottles, as these can be perforated when closed with the cap, so that they can be compressed effectively, an operation that is particularly complex for closed, air-filled bottles.

Figure 9 illustrates an external view of the compression zone 13 schematically shown in section in Figure 8. As can be seen, the door 110 is hinged to the upper edge of the discharge mouth 11 and to the same hinge are attached two swing arms integral with the door 110. A weight, not shown in the Figure, may be attached to the end of each arm so as to constitute the said means of stressing the door 110 toward the closed condition.

## Claims

1. Press machine for compacting solid waste comprising a conduct (1) in which a rotationally driven screw conveyor (2) is arranged centrally, said conduct (1) being provided with a material intake mouth (10) and a material discharge mouth (11),
wherein said conduct (1) is divided into two zones (12, 13), of which a transfer zone (12) of the material provided with the intake mouth (10) and the screw conveyor (2), which screw conveyor (2) has a fixed pitch, and a compression zone (13) of the material provided with the discharge mouth (11), which compression zone (13) presents a progressive variation of the cross-section of the conduct (1) from circular to square in the direction of the discharge mouth (11)
wherein the screw conveyor (2) is housed exclusively in the transfer zone (12),
**characterized in that**
the conduct (1) wall in the transfer zone (12) has one or more longitudinally arranged raised ribs,
wherein the conduct (1) wall in the transfer zone (12) has one or more through slots (43), in which slots (43) elongated elements (3) corresponding in shape to the slots (43) are at least partially inserted, so that the portions of elements (3) protruding inside the conduct (1) constitute the said ribs,
wherein means for fixing (30) the elongated elements (3) inside the slots (43) are provided, which fixing means (30) are adjustable to modify the depth of insertion of the elongated elements (3) inside the slots (43).

2. Machine according to claim 1, wherein the compression zone (13) has a progressive decrease of the cross-section of the conduct (2) in the direction of the discharge mouth (11).

3. Machine according to one or more of the preceding claims, wherein the screw conveyor (2) has a fixed diameter.

4. Machine according to one or more of the preceding claims, wherein the pitch of the screw conveyor (2) substantially corresponds to the height of a plastic bottle.

5. Machine according to one or more of the preceding claims, wherein the screw conveyor (2) has a thrust surface locally perpendicular to the longitudinal axis of the conduct (1).

6. Machine according to one or more of the preceding claims, wherein the screw conveyor (2) comprises a drive shaft (20) having a diameter comprised between 15% and 25% of the diameter of the screw conveyor (2).

## Patentansprüche

1. Pressmaschine zum Kompaktieren von festem Abfall, die einen Kanal (1) umfasst, in dem mittig ein rotierender angetriebener Schraubenförderer (2) eingerichtet ist, wobei der Kanal (1) mit einer Materialeinlassmündung (10) und einer Materialauslassmündung (11) versehen ist,
wobei die Leitung (1) in zwei Zonen (12, 13) unterteilt ist, eine davon eine Transferzone (12) des Materials, die mit der Einlassmündung (10) und dem Schneckenförderer (2) versehen ist, wobei der Schneckenförderer (2) eine fixe Steigung aufweist, und eine Kompressionszone (13) des Materials, die mit der Auslassmündung (11) versehen ist, wobei die Kompressionszone (13) eine allmähliche Variation des Querschnitts des Kanals (1) von kreisförmig auf quadratisch in der Richtung der Auslassmündung (11) aufweist,
wobei die Förderschnecke (2) ausschließlich in der Transferzone (12) untergebracht ist,
**dadurch gekennzeichnet, dass**
die Wand des Kanals (1) in der Transferzone (12) eine oder mehrere längs eingerichtete erhabene Rippen aufweist,
wobei die Wand des Kanals (1) in der Transferzone (12) einen oder mehrere durchgehende Schlitze (43) aufweist, wobei in den Schlitzen (43) längliche Elemente (3), die in ihrer Form den Schlitzen (43) entsprechen, zumindest teilweise eingesetzt sind, so dass die Abschnitte von Elementen (3), die in den Kanal (1) hineinragen, die Rippen bilden,
wobei Mittel (30) zum Befestigen der länglichen Elemente (3) innerhalb der Schlitze (43) bereitgestellt sind, wobei die Befestigungsmittel (30) einstellbar sind, um die Einsetztiefe der länglichen Elemente (3) innerhalb der Schlitze (43) zu modifizieren.

2. Maschine nach Anspruch 1, wobei die Kompressionszone (13) eine allmähliche Abnahme des Querschnitts des Kanals (2) in der Richtung der Auslassmündung (11) aufweist.

3. Maschine nach einem oder mehreren der vorstehenden Ansprüche, wobei der Schraubenförderer (2) einen fixen Durchmesser aufweist.

4. Maschine nach einem oder mehreren der vorstehenden Ansprüche, wobei die Steigung des Schraubenförderers (2) im Wesentlichen der Höhe einer Kunststoffflasche entspricht.

5. Maschine nach einem oder mehreren der vorstehenden Ansprüche, wobei der Schneckenförderer (2) eine Schubfläche aufweist, die zu der Längsachse des Kanals (1) lokal senkrecht steht.

6. Maschine nach einem oder mehreren der vorstehenden Ansprüche, wobei der Schneckenförderer (2) eine Antriebswelle (20) umfasst, die einen Durchmesser zwischen 15 % und 25 % des Durchmessers des Schneckenförderers (2) aufweist.

## Revendications

1. Machine de pressage pour le compactage des déchets solides comprenant un conduit (1) dans lequel un convoyeur à vis (2) entraîné en rotation est agencé au centre, ledit conduit (1) étant pourvu d'une bouche d'entrée (10) de matériau et d'une bouche d'évacuation (11) de matériau,
dans laquelle ledit conduit (1) est divisé en deux zones (12, 13), dont une zone de transfert (12) du matériau pourvue de la bouche d'entrée (10) et du convoyeur à vis (2), lequel convoyeur à vis (2) a un pas fixe, et une zone de compression (13) du matériau pourvue de la bouche
d'évacuation (11), laquelle zone de compression (13) présente une variation progressive de la section transversale du conduit (1) de circulaire à carrée dans la direction de la bouche d'évacuation (11)
dans laquelle le convoyeur à vis (2) est logé exclusivement dans la zone de transfert (12),
**caractérisée en ce que**
la paroi du conduit (1) dans la zone de transfert (12) comporte une ou plusieurs nervures surélevées agencées longitudinalement,
dans laquelle la paroi du conduit (1) dans la zone de transfert (12) comporte une ou plusieurs fentes (43) traversantes, fentes (43) dans lesquelles des éléments (3) allongés de forme correspondant aux fentes (43) sont au moins partiellement insérés, de sorte que les parties des éléments (3) faisant saillie à l'intérieur du conduit (1) constituent lesdites nervures,
dans laquelle des moyens de fixation (30) des éléments (3) allongés à l'intérieur des fentes (43) sont prévus, lesquels moyens de fixation (30) sont réglables pour modifier la profondeur d'insertion des éléments (3) allongés à l'intérieur des fentes (43).

2. Machine selon la revendication 1, dans laquelle la zone de compression (13) présente une diminution progressive de la section transversale du conduit (2) dans la direction de la bouche d'évacuation (11).

3. Machine selon une ou plusieurs des revendications précédentes, dans laquelle le convoyeur à vis (2) a un diamètre fixe.

4. Machine selon une ou plusieurs des revendications précédentes, dans laquelle le pas du convoyeur à vis (2) correspond sensiblement à la hauteur d'une bouteille en plastique.

5. Machine selon une ou plusieurs des revendications précédentes, dans laquelle le convoyeur à vis (2) a une surface de poussée localement perpendiculaire à l'axe longitudinal du conduit (1).

6. Machine selon une ou plusieurs des revendications précédentes, dans laquelle le convoyeur à vis (2) comprend un arbre d'entraînement (20) ayant un diamètre compris entre 15 % et 25 % du diamètre du convoyeur à vis (2).
